Europäisches Patentamt

European Patent Office

Office européen des brevets

(11) Veröffentlichungsnummer: **0 320 835**
**A1**

(12) **EUROPÄISCHE PATENTANMELDUNG**

(21) Anmeldenummer: 88120690.8

(22) Anmeldetag: 10.12.88

(51) Int. Cl.⁴: **A01G 23/00 , B60P 3/40**

(30) Priorität: 17.12.87 DE 3742781

(43) Veröffentlichungstag der Anmeldung:
21.06.89 Patentblatt 89/25

(84) Benannte Vertragsstaaten:
**AT CH DE FR IT LI SE**

(71) Anmelder: **Welte, Alexander**
**Am Gansacker 8**
**D-7801 Umkirch(DE)**

(72) Erfinder: **Welte, Alexander**
**Am Gansacker 8**
**D-7801 Umkirch(DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**D-7800 Freiburg(DE)**

(54) Transportgerät mit einer Lastaufnahmevorrichtung und einem zweispurigen Fahrwerk.

(57) Die Erfindung betrifft ein Transport-Gerät (1), insbesondere zum Rücken von Stammholz abseits der Straße, mit einer Lastaufnahmevorrichtung (17) und einem zweispurigen, motorgetriebenen Fahrwerk. Dabei ist das lastaufnehmende Fahrwerk (2) zweirädrig ausgebildet und bezüglich seiner Bodenfreiheit und dem Radabstand so bemessen, daß der dazwischen befindliche Freiraum mindestens dem Querschnitt eines zu transportierenden Baumstammes entspricht. Das Transport-Gerät (1) ist durch Verschwenken der etwa koaxial angeordneten Räder (3) gegenüber dem Fahrzeug-Körper lenkbar. Zwischen den gegenüber dem Fahrzeug-Körper verschwenkbaren Rädern (3) ist die Lastaufnahme-Vorrichtung (17) angeordnet. Das erfindungsgemäße Transport-Gerät (1) ist vor allem zum Rücken von Schwachholz und Stammholz mittlerer Durchmesser gedacht und auch in engen, zu durchforstenden Beständen wendig und einfach zu bedienen.

Fig. 1

## Transport-Gerät mit einer Lastaufnahmevorrichtung und einem zweispurigen Fahrwerk

Die Erfindung betrifft ein Transport-Gerät, insbesondere zum Rücken von Stammholz abseits der Straße, mit einer Lastaufnahmevorrichtung für Baumstämme und mit einem zweispurigen motorgetriebenen Fahrwerk.

Bereits bekannt sind große, auch allradgetriebene Rücke-Schlepper zur Holzernte, die durch einen, in einer Stahlkabine sitzenden Fahrer bedient werden und im Bestand die gefällten Bäume über Seilschlingen zu sich ziehen und anschließend, etwa bis zu einer Waldstraße, hinter sich herschleifen. Solche Rücke-Schlepper haben sich bei der Holzernte hiebreifer Bestände bestens bewährt, können aber aufgrund ihrer großen Abmessungen und ihres hohen Gewichtes zum Rücken von Schwachholz, welches etwa bei Durchforstungen anfällt, nicht gut verwendet werden. Sie lassen sich in engen, zu durchforstenden Beständen kaum fahren, verdichten den Boden durch ihr hohes Gewicht und verletzen die Rinden oder Wurzelansätze der im Bestand bleibenden Bäume durch ihre Reifen, die Stahlseile oder auch durch die nachgezogenen, gefällten Stämme.

Auch heute noch werden daher zum bestands- und boden schonenden Rücken, etwa bei Durchforstungen, Pferde eingesetzt, die die gefällten Baumstämme über Ketten auch aus engen Beständen ziehen und zu Rücke-Gassen, Waldstraßen od.dgl. vorliefern. Auch beim Einsatz von Pferden wird jedoch beim Rücken der gefällte Baumstamm am Boden geschleift und kann entsprechend den Jungwuchs im Bestand beschädigen, - ebenso, wie die im Wege stehenden Wurzelansätze und unteren Rindenbereiche der im Bestand bleibenden Bäume. Solche Verletzungen der stehenden Bäume beeinträchtigen deren Wachstum und bieten beispielsweise holzzerstörenden Pilzen eine Angriffsfläche.

Daneben hat ein Rücken mit Pferden alle Nachteile, die sich aus der Tierhaltung ergeben. Die Pferde müssen zum Rücken ein Mindestalter erreicht haben, bedürfen einer langen, meist einjährigen Einübungszeit, und benötigen - wegen der beim Rücken hohen Belastung und Beanspruchung - lange Erholungs- und ggfs. auch mehrwöchige Ausheilzeiten zum Kurieren verschiedener Verletzungen. Zudem ist es in einem modernen Forstbetrieb kaum praktikabel, die Pferde rund um die Uhr und auch an Wochenenden zu pflegen.

Man hat daher im wesentlichen bereits zwei Typen von Schwachholz-Schleppern entwickelt, die bei der Schwachholz-Ernte eingesetzt werden. So kennt man kleine Vierrad-Schlepper, die teilweise auch eine Knick-Lenkung aufweisen. Solche Schlepper sind in der Regel auch für andere Verwendungszwecke als das Holzrücken ausgelegt und stellen kein ausgesprochenes Waldfahrzeug dar. Sie sind immer noch vergleichsweise groß und in engen, zu durchforstenden Beständen nur schwer zu fahren. Besteht ihre Schleppeinrichtung in einer Seilwinde mit Seilschlingen, so haben auch sie die oben bereits erwähnten Nachteile hinsichtlich des Jungwuchses und der im Bestande bleibenden Bäume.

Zum Rücken in engen Durchforstungsbeständen ist aber auch ein sehr kleines, zweispuriges, motorgetriebenes Rücke-Gerät bekannt, welches sich über zwei, durch einen kleinen Benzin-Motor angetriebene breite Raupen im Gelände bewegt. Dabei wird das Gerät über eine, Steuerbewegungen übertragende Stange von einer nebenher mitlaufenden Bedienperson zum Einsatzort gelenkt. Mittels einer ebenfalls durch den Benzin-Motor angetriebenen und auf dem Fahrwerk des Rückegerätes aufsitzenden Seilwinde werden die Baumstämme zunächst herangezogen, um anschließend mit ihrem einen Ende auf einen U-förmigen, auf dem Fahrwerk montierten Träger gehievt und mit ihrem anderen Ende auf einen separaten Nachläufer gelegt zu werden.

Dieses Rücke-Gerät ist als solches verhältnismäßig klein, mit dem angehängten Nachläufer jedoch wieder so lang, daß darunter die Bewegungsfreiheit des Gerätes leidet. Das Heranziehen der Baumstämme gefährdet auch hier unnötig viele Bäume und Jungwuchs. Ein weiterer wesentlicher Nachteil dieses vorbekannten Rücke-Gerätes ist zudem, daß die geernteten Baumstämme in der Regel von Hand auf den Nachläufer gelegt werden und daher nur geringere Durchmesser aufweisen dürfen, was den Anwendungsbereich des Gerätes wiederum einschränkt.

Es besteht daher die Aufgabe, ein Transport-Gerät der eingangs erwähnten Art zu schaffen, welches auch in engen Beständen einfach zu fahren und geländegängig ist, und welches bei einfacher und unkomplizierter Bedienbarkeit und Wartung Schwachholz, aber auch Stammholz mittleren Durchmessers rücken kann. Dabei soll es weitgehend bestands- und bodenschonend einsetzbar sein.

Die erfindungsgemäße Lösung dieser Aufgabe besteht insbesondere darin, daß das lastaufnehmende Fahrwerk zweirädrig ist, daß das Transport-Gerät durch Verschwenken od.Einschlagen der etwa koaxial angeordneten Räder gegenüber dem Fahrzeug-Körper lenkbar ist, und daß zwischen den Rädern die Lastaufnahmevorrichtung angeordnet ist, wobei das Fahrwerk bezüglich der Bodenfreiheit und dem Radabstand so bemessen ist, daß der dazwischen befindliche Freiraum mindestens dem Querschnitt eines zu transportierenden Baumstammes entspricht.

Die Ausbildung des erfindungsgemäßen Transport-Gerätes mit zwei Rädern gibt ihm eine kompakte Bauform und gestattet eine hohe Beweglichkeit im Gelände. Diese Beweglichkeit wird durch die Lenkbarkeit und Verschwenkbarkeit der beiden, etwa koaxial angeordneten Räder gegenüber dem Fahrzeug-Körper des erfindungsgemäßen Transport-Gerätes noch weiter erhöht. Durch Anordnung der Lastaufnahmevorrichtung zwischen den Rädern kann auf eine, den Bestand oft unnötig beeinträchtigende Seilwinde und entsprechend auf ein großflächiges Schleifen der Bäume beim Transport verzichtet werden.

Mit dem erfindungsgemäßen Transport-Gerät kann daher bestandsschonend gearbeitet werden. Darüber hinaus eignet es sich aber nicht nur zum Rücken, - d.h. zum Transportieren von Stammholz von seinem ursprünglichen Standort an einen Weg od.dgl. Vielmehr kann es als verhältnismäßig kleines und kompaktes Transport-Gerät und auch zum Transportieren von Stammholz auf Wegen, in Sägewerken od.dgl. verwendet werden. Die hohe Bodenfreiheit des Fahrwerkes gestattet nicht nur den Transport eines zwischen den Rädern gehaltenen Baumes,sondern erhöht zudem auch die Geländegängigkeit des Transport-Gerätes.

Dabei sieht eine besonders vorteilhafte Ausführung der Erfindung von, daß das Transport-Gerät als Fahrantrieb zumindest einen, netzunabhängig betriebenen Elektromotor aufweist. Die Verwendung eines Elektromotors als Fahrantrieb ist besonders umweltschonend. Er verursacht keine übermäßig beeinträchtigenden Lärm- und Abgasemissionen. Dies ist insbesondere auch für das Bedienpersonal wichtig, welches bei einem kompakten Transport-Gerät unmittelbar in dessen Nähe steht und durch keine Kabine od.dgl. vor Lärm oder Abgasen geschützt wird.

Vorteilhaft ist es, wenn der Fahrantrieb aus zwei, jeweils in den Radnaben angeordneten Motoren besteht. Solche in den Radnaben angeordnete Motoren erhöhen die Geländegängigkeit. des erfindungsgemäßen Transport-Gerätes erheblich Dabei ist denkbar, daß der Fahrantrieb aus zwei hydraulischen Radnabenmotoren besteht, die etwa durch Radialkolben mit Rollen auf Schrägflächen im Radinneren wirken.

Die bevorzugte Ausführung sieht jedoch vor, daß der Fahrantrieb aus zwei, jeweils in den Radnaben angeordneten und die Räder vorzugsweise über jeweils ein Plantengetriebe antreibenden Elektromotoren besteht. In den Radnaben angeordnete Elektromotoren erhöhen nicht nur die Geländegängigkeit des erfindungsgemäßen Transport-Gerätes, - sie ermöglichen vielmehr auch dessen einfachen Aufbau, geringe Reparaturanfälligkeit und leichte Wartung.

Auf einen Wechselstrom-Umwandler oder -Erzeuger kann verzichtet werden, wenn der/die Elektromotoren Gleichstrommotoren ist/sind und als Stromquelle zumindest eine in einer Wechselschublade befindliche, aufladbare Batterie dient. Durch die Einsparung dieses zusätzlichen Gewichtes wird das erfindungsgemäße Transport-Gerät leichter und dementsprechend auch bodenschonender.

Die Wechselschublade ermöglicht ein leichtes Auswechseln der Batterien und dient der leichten Handhabung des Gerätes; durch Auswechseln der Batterien kann es auch über einen längeren Zeitraum betrieben werden.

Um eine einfache und leichte Bedienbarkeit der Elektromotoren zu gewährleisten, ist es vorteilhaft, wenn der oder die Elektromotoren über mindestens einen, vorzugsweise zwei Drehgriffe steuerbar sind. Die ohnehin schon gute Geländegängigkeit des Transport-Gerätes wird gesteigert, wenn die Elektromotoren über zwei Drehgriffe getrennt steuerbar sind. Somit kann zur Überwindung eines Hindernisses einer der beiden Motoren mit voller Kraft betrieben werden, während der andere Motor nur eine gedrosselte Kraft aufbringen muß.

Eine hohe Bodenfreiheit des Fahrwerks und ausreichend Platz zum Transportieren eines zwischen den Rädern gehaltenen Baumes läßt sich erreichen, wenn das Fahrwerk in Portalbauweise ausgebildet ist.

Eine vorteilhafte Ausführung des erfindungsgemäßen Transport-Gerätes sieht vor, daß die Lastaufnahmevorrichtung mindestens einen, vorzugsweise zwei gegeneinander bewegbare, sichelförmige Zangen-Greifer aufweist. Solche Zangen-Greifer sind - im Gegensatz zu Seil- oder Ketten-Ausrüstungen -einfach zu bedienen. Eine Ausführung mit zwei gegeneinander bewegbaren Zangen-Greifern umschließt schnell den zu transportierenden Baum und hält ihn sicher und fest.

Nach Aufnahme eines Baumstammes wird dieser durch die Zangen-Greifer an das Fahrwerk gepreßt. Um das Fahrwerk des Transport-Gerätes zu schonen, aber auch um den sicheren Halt des Stammes in der Mitte beider Räder zu gewährleisten, ist es vorteilhaft, wenn die Lastaufnahmevorrichtung ein, vorzugsweise mindestens zwei, insbesondere am vorderen und hinteren Endbereich des Fahrwerks angeordnete Widerlager hat.Zweckmäßigerweise weist dabei jedes Widerlager der Lastaufnahmevorrichtung zwei in einem vorzugsweise stumpfen Winkel zueinander angeordnete Berührungsflächen auf, so daß jeder Baumstaum, unabhängig von seinem Durchmesser, praktisch in der Mitte der Räder gehalten wird.

Um ein völliges und breites Öffnen der Zangen-Greifer zu ermöglichen, dürfen diese nicht bis zum Boden reichen.Auch bewirkt die große Bodenfreiheit des Transport-Gerätes, daß die Zangen-Greifer entsprechend hoch angeordnet sind. Eine besonders vorteilhafte Ausführung der Erfindung sieht daher vor, daß der/die Zangen-Greifer vor und/oder hinter den Rädern, vorzugsweise etwas außerhalb des Bereiches ihres Radumfanges und insbesondere am äußeren Randbereich des Fahrwerks angeordnet ist/sind. Dadurch können die Zangen-Greifer durch Kippen des gesamten Transport-Gerätes in den Bodenbereich herabgeführt werden. Eine solche Ausbildung des erfindungsgemäßen Transport-Gerätes ermöglicht es, daß mittels der Zangen-Greifer sowohl Schwachholz geringeren Durchmessers, als auch solches mittleren und größeren Durchmessers aufgenommen und gerückt werden kann. Ist das erfindungsgemäße Transport-Gerät sowohl vor als auch hinter den Rädern mit Zangen-Greifern ausgestattet, so kann auch lediglich ein Widerlager genügen, um einen Baumstamm sicher etwa in der Mitte der Räder zu halten.

Eine einfache und dennoch leistungsstarke Lastaufnahmevorrichtung läßt sich dadurch erreichen, daß diese zur Betätigung der Zangen-Greifer hydraulische, vorzugsweise elektrohydraulische Bewegungsantriebe aufweist. Zweckmäßigerweise weist das Transport-Gerät eine nachlauffreie Lenkung auf. Dies ist insbesondere dann der Fall, wenn jeder Radträger der lenkbaren Räder bei horizontaler Ausrichtung des Transport-Gerätes um eine vorzugsweise etwa lotrecht zur Radachse verlaufende Lenkachse drehbar gelagert ist, wobei die gedachten Verlängerungen von Lenk- und Radachse sich schneiden Ein solcher Nachlauf wäre bei einem zweirädrigen Fahrzeug überflüssig. Der fehlende Nachlauf hat im übrigen eine sehr direkte Lenkung zur Folge, was die Beweglichkeit des erfindungsgemäßen Transport-Gerätes in engen Beständen erhöht.

Eine einfache Ausführung der Lenkung besteht darin, daß die Räder durch einen, vorzugsweise etwa mittig zwischen ihnen angeordneten Lenkstock lenkbar sind, wobei vorzugsweise eine Schubstange die am Lenkstock angreifenden Lenkbewegungen auf die Radträger überträgt und die Räder über eine Lenkverbindungsstange miteinander verbunden sind.

Denkbar ist, daß der Lenkstock über eine vorzugsweise ein- oder zweiarmig ausgebildete Haltevorrichtung lenkbar ist, die über den Umriß des Transport-Gerätes in Fahrtrichtung etwa 1,5 bis 3,0 m, vorzugsweise etwa 2,0 m übersteht. Die Haltevorrichtung dient dazu, das Transport-Gerät beim Fahren zu lenken, aber auch gleichzeitig im Gleichgewicht zu halten. Das Gleichgewicht des zweirädrigen, durch die Batterien nicht ganz leichten Transport-Gerätes läßt sich besser halten, wenn die Haltevorrichtung - entsprechend den Hebelgesetzen - sehr lang ist. Eine zu lange Haltevorrichtung ist aber beim Fahren durch enge Bestände wiederum hinderlich. Daher ist es vorteilhaft, wenn die Haltevorrichtung etwa 1,5 bis 3,0 m, vorzugsweise etwa 2,0 m übersteht.Insbesondere auch durch eine etwa 2,0 m überstehende Haltevorrichtung läßt sich das Transport-Gerät zum Aufnehmen von Baumstämmen leicht und einfach kippen und anschließend, trotz eines im Bereich seiner Enden aufgenommenen Baumes wieder in die Horizontale bringen.

Ein zu transportierender Baumstamm wird zunächst durch die Lastaufnahmevorrichtung im Bereich seines einen Endes vom Boden aufgenommen und anschließend gehalten und gleichzeitig über den Boden geschleift. Die Beeinträchtigungen des Jungwuchses, der Wurzelansätze und der unteren Rindenbereiche sind wegen der geringen Auflagerfläche des Baumstammes beim Transport durch den Bestand vergleichsweise gering. Um aber beim Transport der nebenherlaufenden Bedienperson eine einfache Bedienung zu ermöglichen und um in sehr engen Durchforstungsbeständen mehr Beweglichkeit zu erreichen, ist es vorteilhaft, wenn die Haltevorrichtung mit dem Lenkstock über eine Kupplung, vorzugsweise eine Rastkupplung kuppelbar ist und im ausgekuppelten Zustand gegenüber dem Lenkstock vorzugsweise um 360° verdrehbar ist. Mittels einer solchen Kupplung läßt sich die Haltevorrichtung gegenüber dem Lenkstock auch so einstellen, daß die Bedienperson in Fahrtrichtung neben dem Transport-Gerät herlaufen kann.

Gerade in einem unwegsamen Waldgelände mit herumliegenden Baumstämmen und Ästen besteht die Gefahr, daß die Bedienperson stolpert und ihr die Haltevorrichtung entgleitet. Damit das Transport-Gerät sich in einem solchen Fall nicht unkontrolliert weiterbewegt, ist es vorteilhaft, wenn als Handgriffe der Haltevorrichtung der/die den Fahrantrieb steuernde Drehgriffe(e) dienen/dient. Beim - auch unbeabsichtigten -Loslassen der den Fahrantrieb steuernden Drehgriffe stoppt gleichzeitig auch das Transport-Gerät in seiner Vorwärtsbewegung.

Zwar kann das erfindungsgemäße Transport-Gerät grundsätzlich - in leicht gekippter Lage - auf den sichelförmige Zangen-Greifern abgestellt werden. Auch läßt sich das Gerät durch die lange Haltevorrichtung bequem fahren; dies wird noch dadurch unterstützt, daß das Gewicht des Fahrwerks und der Batterie bereits vor allem durch die Radträger abgestützt wird und über die Haltevorrichtung also praktisch nur noch im Gleichgewicht zu halten ist.

Um das Transport-Gerät aber unter Schonung der Zangen-Greifer abstellen und das Gerät noch bequemer zum Einsatzort fahren zu können, ist es zweckmäßig, daß es ein zusätzliches, vorzugsweise seitlich in einer Spur angeordnetes, zweckmäßigerweise automatisch bei Kraftschluß der Lastaufnahmevorrichtung nach oben klappbares Hilfs- oder Stützrad aufweist.

Zusätzliche Ausgestaltungen der Erfindung sind in weiteren Unteransprüchen aufgeführt. Nachstehend wird diese anhand eines vorteilhaften Ausführungsbeispieles in Verbindung mit den Zeichnungen noch näher erläutert:

Es zeigen:

Fig. 1 ein erfindungsgemäßes Transport-Gerät in Seitenansicht,

Fig. 2 ein vergleichbares Transport-Gerät, von hinten betrachtet und

Fig. 3 das Transport-Gerät in Draufsicht.

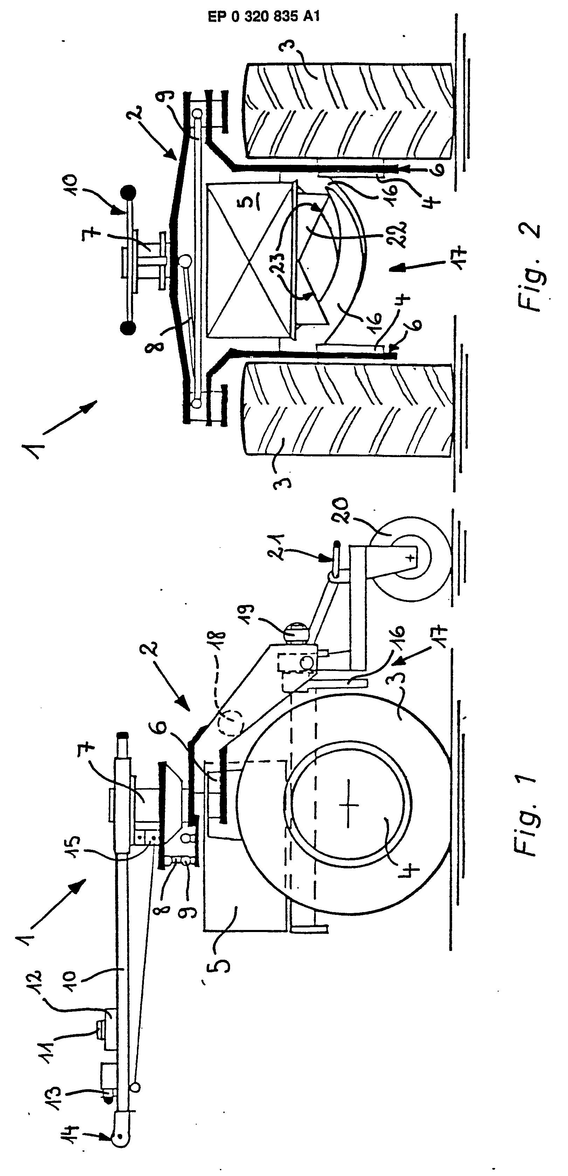

Fig. 1 zeigt ein im ganzen mit 1 bezeichnetes erfindungsgemäßes Transport-Gerät oder Rücke-Gerät. Es hat ein zweispuriges, lastaufnehmendes Fahrwerk 2 mit zwei Rädern 3. In jeder Radnabe der Räder 3 sitzt ein Radnabenmotor 4, der als Elektromotor ausgebildet ist und durch eine, in einer Wechselschublade sitzende Batterie 5 mit Strom versorgt wird. Deutlich zu erkennen ist, daß Radträger 6 der Räder 3 bei horizontaler Ausrichtung des Transport-Gerätes 1 wie in Fig. 1 etwa lotrecht zur Radachse drehbar gelagert sind.
Die Räder werden durch einen etwa mittig zwischen ihnen angeordneten Lenkstock oder Dreh- oder Schwenkbolzen gegenüber dem Fahrzeug-Körper des Transport-Gerätes 1 verschwenkt. Dabei überträgt eine Schubstange 8 die am Lenkstock 7 angreifenden Lenkbewegungen auf die Radträger 6. Die Räder 3 sind über eine Lenkverbindungsstange 9 verbunden. Die Ausbildung des erfindungsgemäßen Transport-Gerätes 1 mit lediglich zwei Rädern bringt eine kompakte Bauform und eine hohe Beweglichkeit des Gerätes mit sich; diese Beweglichkeit wird durch die Lenkbarkeit der beiden Räder 3 noch weiter erhöht.
Der Lenkstock 7 ist über eine zweiarmig ausgebildete Haltevorrichtung 10 drehbar, die in Fahrtrichtung etwa 2,0 m über den Umriß des Transport-Gerätes 1 übersteht. Auf der Haltevorrichtung 10 sitze ein Fahrtrichtungsschalter 11 zur Vor- und Rückwärtsschaltung des Transport-Gerätes 1, sowie eine Batterie-Kapazitätsanzeige 12 und ein Not-Aus-Schalter 13. Die Haltevorrichtung 10 wird an zwei Drehgriffen 14 gehalten, die dem Gasgriff eines Motorrades sehr ähneln und mit denen die Radnaben-Motoren 4 gesteuert werden können. Beim insbesondere unbeabsichtigten Loslassen der Drehgriffe 14 wird den als Elektromotoren ausgebildeten Radnaben-Motoren 4 kein weiterer Batteriestrom zugeführt. Die Haltevorrichtung 10 ist mit dem Lenkstock 7 über eine Rastkupplung 15 kuppelbar und kann im ausgekuppelten Zustand gegenüber dem Lenkstock 7 um 360° verdreht werden. Diese drehbare Ausbildung der Haltevorrichtung 10 gegenüber dem Lenkstock 7 vereinfacht die Bedienbarkeit des Transport-Gerätes 1 und erhöht dessen Beweglichkeit auch in sehr engen Durchforstungsbeständen.
In Fig. 1 sind sichelförmige Zangen-Greifer 16 vor den Rädern 3 zu erkennen, die im Bereich des Radumfanges der Räder 3, am äußeren Rand des Fahrwerks angeordnet sind.

Die sichelförmigen Zangen-Greifer 16 gehören zu einer Lastaufnahmevorrichtung 17, die Schwachholz, aber auch Stammholz mittleren Durchmessers aufnehmen kann.

Die Lastaufnahmevorrichtung weist elektro-hydraulische Bewegungsantriebe auf, die über eine Elektro-Hydraulik-Pumpe 18 und Hydraulik-Zylinder 19 betrieben werden. Denkbar wäre aber auch, die Zangen-Greifer 16 der Lastaufnahmevorrichtung 17 über eine elektrische Spindelbetätigung zu bewegen. Über den äußeren Rand des Fahrwerks 2 ist ein als Schwenkrolle ausgebildetes Stützrad 20 kippbar, welches ebenfalls in einer Spur der Räder 3 läuft und durch einen Kipphebel 21 auf den Boden geschwenkt werden kann.

Fig. 2 zeigt das erfindungsgemäße Transport-Gerät 1 von hinten. Deutlich zu erkennen ist die Lastaufnahmevorrichtung 17, die zwei gegeneinander bewegbare, sichelförmige Zangen-Greifer 16 und wenigstens ein Widerlager 22 aufweist, mit in einem stumpfen Winkel zueinander angeordneten Berührungsflächen 23. Dabei ist die Lastaufnahmevorrichtung 17 zwischen den koaxial und lenkbar ausgebildeten Rädern 3 des lastaufnehmenden Fahrwerks 2 angeordnet. Das Fahrwerk 2 ist in Portalbauweise ausgebildet und bezüglich seiner Bodenfreiheit und seinem Radabstand so bemessen, daß der dazwischen befindliche Freiraum mindestens dem Querschnitt eines zu transportierenden Baumes entspricht. Der zu transportierende Baum wird von der Lastaufnahmevorrichtung 17 aufgenommen und während des Transportes sicher zwischen den Rädern 3 gehalten. Da der Baumstamm nur noch mit einem Ende über den Boden geschliffen wird und das Transport-Gerät sehr beweglich zu fahren ist, beeinträchtigt das andere, auf dem Boden schleifende Ende des Baumes den Jungwuchs und den bodennahen Rindenbereich der im Bestand bleibenden Bäume nur verhältnismäßig gering.

Aus dem Vergleich von Fig. 1 mit Fig. 2 läßt sich die Funktionsweise der Lastaufnahmevorrichtung 17 erkennen. Sie ist im Bereich des Radumfanges der Räder 3 angeordnet und kann durch Kippen der Haltevorrichtung 10 bis in den bodennahen Bereich heruntergeführt werden. Damit kann die Lastaufnahmevorrichtung 17 auch auf dem Boden liegende Baumstämme sicher greifen und aufnehmen. Der zwischen den Rädern 3 aufgenommene Baumstamm wird mit seinem einen Ende durch die Zangen-Greifer 16 an die prismenförmigen Widerlager 22 gepreßt. Die Bedienperson kann das von den Zangen-Greifern 16 gehaltene Ende des Baumstammes leicht und bequem anheben, indem sie die Haltevorrichtung 10 wieder in eine etwa horizontale Lage bringt. Während das eine Ende des zu transportierenden Baumstammes durch die Lastaufnahmevorrichtung 17 etwas über dem Boden gehalten wird, liegt das andere Ende des Baumstammes am Boden auf. Dadurch wird gleichzeitig das Transport-Gerät 1 in seiner Lager abgestützt. Das Stützrad 20, welches in dieser Phase nicht benötigt wird, kann mittels des Kipphebels 21 nach oben geschwenkt werden. Denkbar ist aber auch, daß das Stützrad automatisch über einen, über die Hydraulik der Zangen-Greifer 16 gesteuerten Hydraulikzylinder angehoben wird. Auf diese Weise kann der Baumstamm leicht und bequem durch den zu durchforstenden Bestand, etwa bis zu einer Rücke-Gasse oder einer Waldstraße transportiert werden.

Durch die in einer Wechselschublade sitzenden, auswechselbaren Batterien 5 ist auch ein längerer Betrieb des erfindungsgemäßen Transport-Gerätes 1 im Wald möglich.

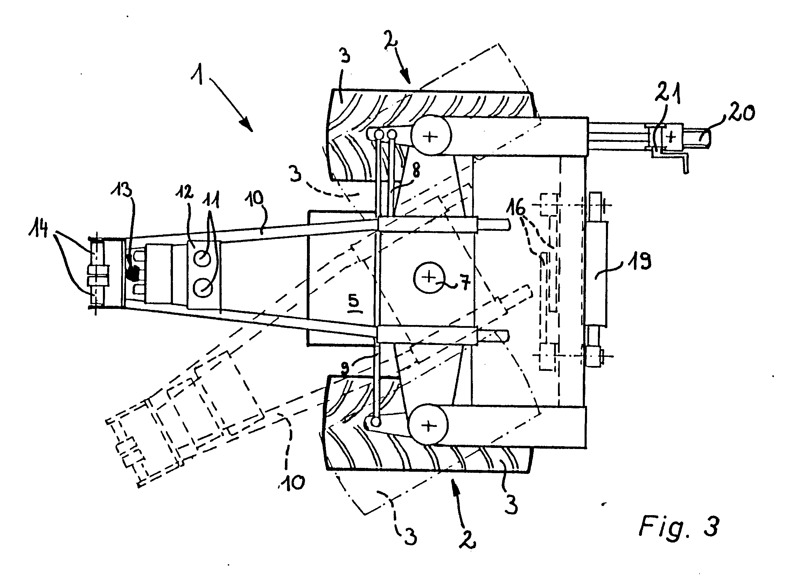

Fig. 3 zeigt das Transport-Gerät 1 in Draufsicht und veranschaulicht dessen Lenkbarkeit. Die Bedienperson kann das Transport-Gerät 1 über die am Lenkstock 7 angreifende Haltevorrichtung 10 lenken. Durch ein Verschwenken der Haltevorrichtung 10 und eine dadurch bewirkte Drehbewegung des Lenkstockes 7 werden auch die beiden Räder 3 gegenüber dem Fahrzeug-Körper des Transport-Gerätes 1 verschwenkt und in die gewünschte Fahrtrichtung verstellt. Dabei greift die Bedienperson an den Drehgriffen 14 an, die gleichzeitig die in den Radnaben der Räder 3 sitzenden Radnaben-Motoren 4 steuern. Im Sichtfeld der Bedienperson sitzen auf der Haltevorrichtung 10 die Fahrtrichtungsschalter 11, die Batteriekapazitätsanzeige 12 sowie der Not-aus-Schalter 13. Durch Auskuppeln der Haltevorrichtung 10 kann diese gegenüber dem Lenkstock 7 nach rechts oder links verdreht werden, so daß das Transport-Gerät 1 auch von der Seite bequem gelenkt und bedient werden kann.

Nach einer besonders vorteilhaften Weiterbildung gemäß der Erfindung, für die selbständiger Schutz beansprucht wird, ist vorgesehen, daß das lastaufnehmende Fahrwerk zweirädrig ist, daß dessen beide, etwa koaxial angeordneten Räder getrennt voneinander wahlweise mit gleich- oder gegensinnigen Drehrichtungen antreibbar sind und zwischen ihnen die Lastaufnahmevorrichtung angeordnet ist, und daß das Fahrwerk bezüglich der Bodenfreiheit und dem Radabstand so bemessen ist, daß der dazwischen befindliche Freiraum mindestens dem Querschnitt eines zu transportierenden Baumstammes entspricht.

Bei dieser Ausführungsform des erfindungsgemäßen Transport-Gerätes wird dessen Wendigkeit beispielsweise auch in engen Beständen noch zusätzlich begünstigt. Durch die getrennt voneinander und auch in unterschiedliche Drehrichtungen antreibbaren Räder kann das Transport-Gerät gut in die gewünschte Fahrtrichtung gelenkt werden. Dabei kann das Transport-Gerät so ausgebildet werden, daß es in unbeladenem Zustand sich beispielsweise auch nahezu auf der Stelle drehen kann.

Um eine möglichst große Wenigkeit des erfindungsgemäßen Transport-Gerätes zu erreichen, ist es vorteilhaft, wenn auch bei dieser Weiterbildung zum Lenken des Transport-Gerätes die Räder gegenüber dem Fahrzeug-Körper verschwenkbar oder einschlagbar sind.

In engen Durchforstungsbeständen, etwa bei einem Fahrtrichtungswechsel, ist evtl. die über den Umriß des Transport-Gerätes ragende Haltevorrichtung hinderlich. Ein weiterbildender Vorschlag gemäß der Erfindung sieht daher vor, daß das Transport-Gerät und dessen Fahrantrieb über eine Fernsteuerung, vorzugsweise eine Kabelfernsteuerung fernbedienbar ist. Eine solche Ausführungsform, bei der das Transport-Gerät über eine Fernsteuerung fernbedienbar ist, hat zusätzlich den Vorteil, daß etwa durch Bodenwellen bedingte Erschütterungen des Transport-Gerätes nicht auf das Bedienpersonal übertragen werden.

Zweckmäßigerweise weist dabei das Transport-Gerät zwei, vorzugsweise in jeweils einer Spur des lastaufnehmenden Fahrwerkes angeordnete, insbesondere automatisch bei Kraftschluß der Lastaufnahmevorrichtung nach oben klappbare oder dergleichen anhebbare Hilfs- oder Stützräder auf. Durch zwei derartige Hilfs- oder Stützräder ist auch ein fernbedienbares und nicht über eine Haltevorrichtung gehaltenes Transport-Gerät ausreichend standfest.

Insbesondere durch eine Kabel-Fernsteuerung wird die Wendigkeit des erfindungsgemäßen Transport-Gerätes noch zusätzlich erhöht, da auf eine über den Umriß des erfindungsgemäßen Transport-Gerätes ragende Haltevorrichtung verzichtet werden kann. So ist beispielsweise ohne Rücksicht auf eine evtl. auch lange Haltevorrichtung das Transport-Gerät durch Antrieb der beiden Elektromotoren in gegensätzliche Drehrichtungen auch auf der Stelle drehbar.

Zweckmäßigerweise weist die Kabel-Fernsteuerung ein über einen Tragegurt tragbares Steuerpult auf, welches von der Bedienperson leicht beispielsweise vor dem Bauch getragen werden kann. Dabei sind die beiden Elektromotoren in den Rädern des lastaufnehmenden Fahrwerkes über jeweils einen als Steuerhebel ausgebildeten Umschalter mit Null-Stellung steuerbar.

Über eine flexible Kabel-Führung kann das Kabel der Kabelfernsteuerung aus dem Fahrbereich des Transport-Gerätes gehalten werden.

Um auch bei in entgegengesetzte Drehrichtungen angetriebenen Elektromotoren einen guten Fahrbetrieb zu ermöglichen, ist es zweckmäßig, wenn die Elektromotoren zumindest zweistufig antreibbar und beim Anfahren des Transport-Gerätes vorzugsweise mit einer reduzierten Spannung, insbesondere etwa der halben Vollast-Spannung, betrieben sind.

Alle vorbeschriebenen oder in den Ansprüchen aufgeführten Einzelmerkmale können einzeln oder in beliebiger Kombination miteinander erfindungswesentlich sein.

**Ansprüche**

1. Transport-Gerät, insbesondere zum Rücken von Stammholz abseits der Straße mit einer Lastaufnahmevorrichtung für Baumstämme und mit einem zweispurigen motorgetriebenen Fahrwerk, **dadurch gekennzeichnet,** daß das lastaufnehmende Fahrwerk (2) zweirädrig ist, daß das Transport-Gerät durch Verschwenken oder Einschlagen der etwa koaxial angeordneten Räder (3) gegenüber dem Fahrzeug-Körper lenkbar ist und daß zwischen den Rädern (3) die Lastaufnahmevorrichtung (17) angeordnet ist, wobei das Fahrwerk (2) bezüglich der Bodenfreiheit und dem Radabstand so bemessen ist, daß der dazwischen befindliche Freiraum mindestens dem Querschnitt eines zu transportierenden Baumstammes entspricht.

2. Transport-Gerät nach Anspruch 1, dadurch gekennzeichnet, daß das Transport-Gerät (1) als Fahrantrieb zumindest einen, netzunabhängig betriebenen Elektromotor aufweist.

3. Transport-Gerät nach Anspruch 1, dadurch gekennzeichnet, daß der Fahrantrieb aus zwei, jeweils in den Radnaben angeordneten Motoren (4) besteht.

4. Transport-Gerät nach Anspruch 3, dadurch gekennzeichnet, daß der Fahrantrieb aus zwei hydraulischen Radnaben-Motoren (4) besteht.

5. Transport-Gerät nach Anspruch 2 oder 3, dadurch gekennzeichnet, daß der Fahrantrieb aus zwei, jeweils in den Radnaben angeordneten und die Räder (3) vorzugsweise über jeweils ein Planetengetriebe antreibenden Elektromotoren besteht.

6. Transport-Gerät nach einem der Ansprüche 1 bis 5, dadurch gekennzeichnet, daß der/die Elektromotoren Gleichstrom-Motoren ist/sind und als Stromquelle zumindest eine, in einer Wechselschublade befindliche, aufladbare Batterie (5) dient.

7. Transport-Gerät nach einem der Ansprüche 1 bis 6, dadurch gekennzeichnet, daß der oder die Elektromotoren über mindestens einen, vorzugsweise zwei Drehgriffe (14) steuerbar sind.

8. Transport-Gerät nach einem der Ansprüche 1 bis 7, dadurch gekennzeichnet, daß das Fahrwerk (2) in Portalbauweise ausgebildet ist.

9. Transport-Gerät nach einem der Ansprüche 1 bis 8, dadurch gekennzeichnet, daß die Lastaufnahmevorrichtung (17) mindestens einen, vorzugsweise zwei gegeneinander bewegbare, sichelförmige Zangen-Greifer (16) aufweist.

10. Transportgerät nach einem der Ansprüche 1 bis 9, dadurch gekennzeichnet, daß die Lastaufnahmevorrichtung (17) mindestens ein, vorzugsweise zwei, insbesondere am vorderen und hinteren Endbereich des Fahrwerks (2) angeordnete Widerlager (22) hat.

11. Transport-Gerät nach einem der Ansprüche 1 bis 10, dadurch gekennzeichnet, daß der/die Zangen-Greifer (16) vor und/oder hinter den Rädern (3) vorzugsweise etwas außerhalb des Bereiches ihres Radumfanges und insbesondere am äußeren Randbereich des Fahrwerks (2) angeordnet ist/sind.

12. Transport-Gerät nach einem der Ansprüche 1 bis 11, dadurch gekennzeichnet, daß die Lastaufnahmevorrichtung (17) zur Betätigung der Zangen-Greifer (16) hydraulische, vorzugsweise elektro-hydraulische Bewegungsantriebe aufweist.

13. Transport-Gerät nach einem der Ansprüche 1 bis 12, dadurch gekennzeichnet, daß es eine nachlauffreie Lenkung aufweist.

14. Transport-Gerät nach einem der Ansprüche 1 bis 13, dadurch gekennzeichnet, daß jeder Radträger (6) der lenkbaren Räder (3) bei horizontaler Ausrichtung des Transport-Gerätes (1) etwa lotrecht zur Radachse drehbar gelagert ist, wobei die gedachten Verlängerungen von Lenk- und Radachse sich schneiden.

15. Transport-Gerät nach einem der Ansprüche 1 bis 14, dadurch gekennzeichnet, daß die Räder (3) durch einen, vorzugsweise etwa mittig zwischen ihnen angeordneten Lenkstock (7) lenkbar sind, wobei vorzugsweise eine Schubstange (8) die am Lenkstock (7) angreifenden Lenkbewegungen auf die Radträger (6) überträgt und die Räder (3) über eine Lenkverbindungsstange (9) miteinander verbunden sind.

16. Transport-Gerät nach einem der Ansprüche 1 bis 15, dadurch gekennzeichnet, daß der Lenkstock (7) über eine, vorzugsweise ein- oder zweiarmig ausgebildete Haltevorrichtung (10) lenkbar ist, die über den den Umriß des Transport-Gerätes (1) in Fahrtrichtung etwa 1,5 bis 3,0 m, vorzugsweise etwa 2,0 m übersteht.

17. Transport-Gerät nach einem der Ansprüche 1 bis 16, dadurch gekennzeichnet, daß die Haltevorrichtung (10) mit dem Lenkstock (7) über eine Kupplung, vorzugsweise eine Rastkuplung (15) kuppelbar ist und im ausgekuppelten Zustand gegenüber dem Lenkstock (7) vorzugsweise um 360° verdrehbar ist.

18. Transport-Gerät nach einem der Ansprüche 1 bis 17, dadurch gekennzeichnet, daß als Handgriffe der Haltevorrichtung (10) der/die den Fahrantrieb steuernde Drehgriff(e) (14) dienen(dient).

19. Transport-Gerät nach einem der Ansprüche 1 bis 18, dadurch gekennzeichnet, daß das Transport- Gerät (1) ein zusätzliches vorzugsweise seitlich in einer Spur angeordnetes, zweckmäßigerweise automatisch bei Kraftschluß der Lastaufnahmevorrichtung nach oben klappbares Hilfs- oder Stützrad (20) aufweist.

20. Transport-Gerät nach Anspruch 19, dadurch gekennzeichnet, daß das Hilfs- oder Stützrad (20) kleiner als die Räder (3) des lastaufnehmenden Fahrwerks (2) und vorzugsweise als Schwenkrolle ausgebildet ist.

21. Transport-Gerät nach einem der Ansprüche 10 bis 20, dadurch gekennzeichnet, daß jedes Widerlager (22) der Lastaufnahmevorrichtung (17) zwei in einem vorzugsweise stumpfen Winkel zueinander angeordnete Berührungsflächen (23) aufweist.

22. Transport-Gerät nach dem Oberbegriff des Patentanspruches 1, dadurch gekennzeichnet, daß das lastaufnehmende Fahrwerk zweirädrig ist, daß dessen beide, etwa koaxial angeordneten Räder getrennt voneinander wahlweise mit gleich-oder gegensinnigen Drehrichtungen antreibbar sind und zwischen ihnen die Lastaufnahmevorrichtung angeordnet ist, und daß das Fahrwerk bezüglich der Bodenfreiheit und dem Radabstand so bemessen ist, daß der dazwischen befindliche Freiraum mindestens dem Querschnitt eines zu transportierenden Baumstammes entspricht.

23. Transport-Gerät nach Anspruch 22, dadurch gekennzeichnet, daß zum Lenken des Transport-Gerätes die Räder gegenüber dem Fahrzeug-Körper verschwenkbar oder einschlagbar sind.

24. Transport-Gerät nach einem der Ansprüche 1 bis 23, dadurch gekennzeichnet, daß die in den Radnaben angeordneten Elektromotoren getrennt ansteuerbar sind.

25. Transport-Gerät nach einem der vorstehenden Ansprüche, dadurch gekennzeichnet, daß das Transport-Gerät und dessen Fahrantrieb über eine Fernsteuerung, vorzugsweise eine Kabel-Fernsteuerung fernbedienbar ist.

26. Transport-Gerät nach einem der vorstehenden Ansprüche, dadurch gekennzeichnet, daß es zwei, vorzugsweise in jeweils einer Spur des lastaufnehmenden Fahrwerkes angeordnete, insbesondere automatisch bei Kraftschluß der Lastaufnahmevorrichtung nach oben klappbare od.dgl. anhebbare Hilfs- oder Stützräder aufweist.

27. Transport-Gerät nach einem der vorstehenden Ansprüche, dadurch gekennzeichnet, daß die Elektromotoren zumindest zweistufig antreibbar und beim Anfahren des Transport-Gerätes vorzugsweise mit einer reduzierten Spannung, insbesondere etwa der halben Vollast-Spannung, betrieben sind.

Fig. 1

Fig. 2

EP 0 320 835 A1

Fig. 3

EP 0 320 835 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | BE-A-447609 (HUSSON) <br> * Seite 2, Absatz 2 - 3 * <br> * Seite 3, Absatz 5 - Seite 6, Absatz 1; Figuren 1-4 * | 1, 8-11 | A01G23/00 <br> B60P3/40 |
| Y | | 2-5, 14, 19, 20, 22-24 | |
| | --- | | |
| Y | DE-A-2264133 (KLAUE) <br> * Seite 2, letzter Absatz - Seite 5, letzter Absatz; Anspruch 8; Figuren 2-4 * | 2-5, 14, 22-24 | |
| | --- | | |
| Y | US-A-3231119 (PARTIN) <br> * Spalte 3, Zeile 7 - Zeile 14; Figur 1 * | 19, 20 | |
| | ----- | | |

|  |
|---|
| **RECHERCHIERTE SACHGEBIETE (Int. Cl.4 )** |
| A01G <br> B60P <br> B60K |

Der vorliegende Recherchenbericht wurde für alle Patentansprüche erstellt

| Recherchenort | Abschlußdatum der Recherche | Prüfer |
|---|---|---|
| DEN HAAG | 03 MARZ 1989 | HERYGERS J.J. |